# EUROPÄISCHE PATENTSCHRIFT

(11) **EP 2 504 550 B1**
(45) Veröffentlichungstag und Bekanntmachung des Hinweises auf die Patenterteilung: **22.07.2015**
(21) Anmeldenummer: 10770773.9
(22) Anmeldetag: 13.10.2010
(51) Int. Cl.: F02D 35/02, G01L 23/22

(54) **VERFAHREN UND VORRICHTUNG ZUR ERKENNUNG VON UNKONTROLLIERTEN VERBRENNUNGEN IN EINEM VERBRENNUNGSMOTOR**
METHOD AND APPARATUS FOR DETECTING UNCONTROLLED IGNITION IN AN INTERNAL COMBUSTION ENGINE
PROCÉDÉ ET APPARAIL DE DÉTECTION DE L'ALLUMAGE NON CONTRÔLÉ DANS UN MOTEUR À COMBUSTION INTERNE

(30) Priorität: 23.11.2009 DE 102009046961
(43) Veröffentlichungstag der Anmeldung: 03.10.2012
(73) Patentinhaber: Robert Bosch GmbH, 70442 Stuttgart (DE)
(72) Erfinder: HAMEDOVIC, Haris, 71696 Moeglingen (DE); FISCHER, Wolfgang, 70839 Gerlingen (DE); KLUTH, Carsten, 70469 Stuttgart (DE); HAEMING, Werner, 74861 Neudenau (DE)
(86) Internationale Anmeldenummer: PCT/EP2010/065342
(87) Internationale Veröffentlichungsnummer: WO 2011/061014

(56) Entgegenhaltungen:
- DE-A1-102008 001 830
- DE-B3-102007 024 415
- DE-B3-102009 008 247

## Beschreibung

### Stand der Technik

Die Erfindung betrifft ein Verfahren zur Erkennung von unkontrollierten Verbrennungen in einem Verbrennungsmotor, welche insbesondere unabhängig von der Zündung durch eine Zündkerze auftreten, wobei die durch die Verbrennungen ausgelösten Druckschwingungen im Brennraum detektiert und ausgewertet werden sowie eine Vorrichtung zur Durchführung des Verfahrens.

In einem Benzinmotor führt eine Verbrennung des zugeführten Kraftstoff-LuftGemisches dazu, das Fahrzeug in den Fahrbetrieb zu versetzen bzw. den Fahrbetrieb aufrecht zu erhalten. Dabei wird die Verbrennung des Kraftstoff-LuftGemisches durch den Zündfunken einer Zündkerze eingeleitet. Während sich die Flammenfront im Brennraum ausbreitet, kommt es im Endgasbereich durch hohe Drücke und Temperaturen zu Selbstzündungen. Die dann schlagartig ablaufende Verbrennung verursacht im Brennraum des Benzinmotors einen starken Druckanstieg, der eine Druckwelle erzeugt, die sich ausbreitet und auf die den Brennraum begrenzenden Wände trifft, wo die hochfrequenten Schwingungen in Körperschall umgewandelt werden. Diese Schwingungen werden durch Klopfsensoren (Körperschallsensoren) detektiert und bei der Ansteuerung des Benzinmotors durch eine Klopfregelung berücksichtigt, um Motorschäden zu verhindern. Der Benzinmotor wird dabei wirkungsgradoptimal immer an der Klopfgrenze betrieben, wodurch Beschädigungen des Benzinmotors durch das Klopfen vermieden werden.

Neben den beschriebenen klopfenden Verbrennungen treten aber auch Selbstentflammungen auf, die durch heiße Stellen im Brennraum, Öltröpfchen oder heißen Restgaszonen im Kraftstoff-Luft-Gemisch verursacht werden. Solche Selbstentflammungen können als Vorentflammungen vor dem Auftreten des Zündfunkens und als Nachentflammungen nach dem Auftreten des Zündfunkens vorkommen. Die Selbstentflammungen zeichnen sich durch Verbrennungsdrücke mit hohen Druckamplituden aus, welche sehr schnell zu Motorschäden führen können.

Gemäß der EP 1 715 179 A2 werden verfrühte Verbrennungen mit Hilfe des Klopfsensors bestimmt. Da solche Selbstentflammungen aber nur bedingt eine klopfende Verbrennung infolge von hochfrequenten Druckanteilen nach sich ziehen, lassen sich Selbstentflammungen mit überwiegenden niederfrequenten Druckverläufen, die keinen Einfluss auf den Körperschall der Brennraumwände nehmen, nicht mit Klopfsensoren erkennen.

### Offenbarung der Erfindung

Das erfindungsgemäße Verfahren zur Erkennung von unkontrollierten Verbrennungen in einem Verbrennungsmotor mit den Merkmalen des Anspruchs 1 weist den Vorteil auf, dass nicht durch einen Zündfunken einer Zündkerze ausgelöste Selbstentflammungen, welche niederfrequente Druckverläufe mit optionalen hochfrequenten Druckanteilen nach sich ziehen, jederzeit sicher detektiert werden können. Dadurch, dass zur Feststellung einer unkontrollierten Verbrennung vor der Zündung durch die Zündkerze und/oder vor dem normalen Brennbeginn für einen gegebenen Zündzeitpunkt die durch die Druckschwingungen beeinflusste Drehzahl einer Kurbelwelle des Verbrennungsmotors ausgewertet wird, ist kein Klopfsensor zur Auswertung notwendig. Die Erkennung der unkontrollierten Verbrennungen beruht lediglich auf der Auswertung des Drehzahlverlaufes der Kurbelwelle. Da die Drehzahl der Kurbelwelle zur Steuerung und/oder Regelung des Motors gemessen wird, entfällt ein zusätzlicher hardwaremäßiger Aufwand zur Messung der Drehzahl.

Vorteilhafterweise wird die Drehzahl der Kurbelwelle bestimmt und in Abhängigkeit von der gemessenen Drehzahl ein die Verbrennung charakterisierender Parameter ermittelt, welcher mit einem entsprechenden Parameter verglichen wird, der bei einer kontrollierten Verbrennung infolge der Zündung einer Zündkerze bestimmt wurde und bei Abweichung des Parameters vom Referenzparameter auf das Vorliegen einer unkontrollierten Verbrennung geschlossen wird. Eine solche Vorgehensweise ist besonders vorteilhaft bei Motorkonzepten einsetzbar, welche durch eine hohe Leistungsdichte, insbesondere durch Downsizeing- Konzepte, charakterisiert sind. Da Selbstentflammungen aufgrund einer Änderung des Verbrennungsdruckanteils eine Verschiebung des Druckverlaufes in dem Brennraum verursachen, kann dies einfach über die Auswertung des Drehzahlsignals der Kurbelwelle erfasst werden.

In einer Ausgestaltung ist der von der Drehzahl abhängige Parameter ein Gasmoment, welches durch die Druckschwingungen im Brennraum infolge der Verbrennung auf die Kurbelwelle wirkt. Da die durch die Druckverläufe auf die Pleuelstange eines Kolbens des Benzinmotors wirkende Kraft die Geschwindigkeit der Kurbelwelle verändert, führt dieses im Zustand der Verdichtung eines Zylinders des Benzinmotors zu einer Verlangsamung der Geschwindigkeit der Kurbelwelle, während bei einer Verbrennung die Geschwindigkeit der Kurbelwelle erhöht wird. Solche Geschwindigkeitsänderungen, mit verursacht durch das Gasmoment, lassen sich gut aus der infolge der Geschwindigkeitsänderung veränderten Drehzahl darstellen.

In einer Weiterbildung ist der von der Drehzahl abhängige Parameter eine veränderte Verbrennungslage.

Vorteilhafterweise werden das bestimmte Gasmoment und/ oder die bestimmte Verbrennungslage mit Referenzwerten verglichen, welche bei der kontrollierten Verbrennung infolge der Zündung durch die Zündkerze ermittelt wurden, wobei bei dem Vergleich aktuelle Stellgrößen und der Betriebspunkt des Verbrennungsmotors berücksichtigt werden. Dadurch, dass die Referenzwerte jeweils im Zusammenhang mit dem aktuellen Zustand des Verbrennungsmotors ausgewählt werden, ist der Vergleich mit den aus der Drehzahl abgeleiteten Parametern besonders zuverlässig, da die zum Zeitpunkt der Bestimmung der Parameter aktuell vorhandenen Betriebsbedingungen des Verbrennungsmotors mit berücksichtigt werden.

In einer Variante werden bei dem Vergleich der durch die Verbrennung hervorgerufenen Verbrennungslage mit der Verbrennungslage, welche sich aus der kontrollierten Verbrennung durch Zündung durch die Zündkerze ergibt, als aktuelle Stellgrößen der Zündwinkel, die Last und die Drehzahl berücksichtigt.

In einer Ausgestaltung wird die sich aus der Verbrennung ergebende Verbrennungslage mit Hilfe mindestens eines die aktuellen Stellgrößen umfassenden Kennfeldes und/oder einem physikalisch basierten mathematischen Modell, welches die aktuellen Stellgrößen beinhaltet, bestimmt. Kennfelder lassen sich einfach vor Beginn einer Messung für alle denkbaren Betriebszustände des Verbrennungsmotors ermitteln, weshalb bei dem Vergleich eine schnelle Ermittlung der aktuell sich ergebenden Verbrennungslage gegeben ist.

In einer Weiterbildung werden die Gasmomente, welche durch die Druckschwingungen im Brennraum infolge der Verbrennung auf die Kurbelwelle auftreten, als Wechselmomente ermittelt. Diese Wechselmomente lassen sich einfach aus dem Verlauf der Drehzahl ermitteln, da sie durch die Verzögerung oder Beschleunigung der Kurbelwelle verursacht werden.

Vorteilhafterweise werden die Wechselmomente hinsichtlich der oszillierenden Massen und/oder den Verläufen der Wechselmomente und/oder den Geberadfehlern korrigiert. Die oszillierenden Massen werden hauptsächlich durch die Kolben der Zylinder des Verbrennungsmotors gebildet, welche den Verlauf der Wechselmomente für diese Anwendung nachteilig beeinflussen, weshalb deren Anteile rechnerisch aus den Wechselmomenten eliminiert werden. Dadurch wird ein genaueres Ergebnis bei der Bestimmung von unkontrollierten Verbrennungen erhalten.

In eine Variante wird der Verlauf der Wechselmomente jeweils für jeden Zylinder in einem geeigneten Bereich zu jeweils einem Intergralendwert in einem geeigneten Kurbelwellenfenster aufsummiert, aus denen jeweils für jeden Zylinder des Verbrennungsmotors auf ein zylinderindividuelles Gasmoment geschlossen wird. Ausgehend von einem solchen zylinderindividuellen Gasmoment lässt sich bestimmen, in welchem Zylinder des Verbrennungsmotors eine unkontrollierte Verbrennung auftritt, da diese Integration für jeden Zylinder separat vorgenommen wird.

Alternativ wird der Verlauf eines Wechselmomentes in mindestens zwei Bereiche unterteilt, wobei für jeden Bereich ein Integralendwert berechnet wird und ein Vergleich jedes Intergralendwertes mit einem Referenzintegralendwert oder ein Vergleich der beiden Integralendwerte untereinander erfolgt, wobei bei Auftreten einer Abweichung auf eine unkontrollierte Verbrennung geschlossen wird. Die beiden Bereiche sind vorteilhafterweise so gelegt, dass der aus dem ersten Bereich bestimmte Integralwert sensitiv ist für Verbrennungen, die von dem Zündfunken der Zündkerze ausgelöst werden, während der zweite Bereich einen Integralwert kennzeichnet, der Verbrennungen mit einer unnormal frühen Verbrennungslage repräsentiert. Die Bereiche hängen dabei mindestens vom Betriebspunkt des Motors und dem Zündwinkel ab.

In einer Ausgestaltung werden zur Entscheidung über das Vorliegen einer unkontrollierten Verbrennung Referenzwerte herangezogen, die aus den Werten vorhergehender Verbrennungslagen ermittelt werden. Dadurch werden die durch die Referenzwerte repräsentierten motorspezifischen Aussagen über die tatsächlichen Verbrennungslagen während einer kontrollierten Verbrennung, welche durch einen Zündfunken der Zündkerze ausgelöst wurden, konkretisiert. Diese Referenzwerte tragen beim Vergleich mit der zu untersuchenden drehzahlabhängigen Verbrennungslage zur Erhöhung der Genauigkeit bei der Ermittlung einer unkontrolliert ausgelösten Verbrennung bei.

In einer Weiterbildung erfolgt die Auswertung der Drehzahl auf der Basis von Zahnzeiten des an der Kurbelwelle angebrachten Geberrades. Somit werden geläufige Verfahren zur Bestimmung der Drehzahl bei dem Verfahren zur Ermittlung einer unkontrollierten Verbrennung in einem Benzinmotor eingesetzt. Alternativ können auch Segmente verwendet werden, die mehrere Zahnzeiten beinhalten.

Eine weitere Weiterbildung der Erfindung betrifft eine Vorrichtung zur Erkennung von unkontrollierten Verbrennungen in einem Verbrennungsmotor, welche unabhängig von der Zündung durch eine Zündkerze auftreten, wobei die durch die Verbrennungen ausgelösten Druckschwingungen im Brennraum ausgewertet werden. Um nicht durch einen Zündfunken einer Zündkerze ausgelöste Selbstentflammungen jederzeit sicher detektieren zu können, sind Mittel vorhanden, welche zur Feststellung einer unkontrollierten Verbrennung vor der Zündung durch die Zündkerze die durch die Druckschwingungen beeinflusste Drehzahl einer Kurbelwelle des Verbrennungsmotors auswerten. Somit ist kein Klopfsensor zur Auswertung des erfindungsgemäßen Verfahrens notwendig, da die Erkennung auf der Auswertung der Drehzahl der Kurbelwelle beruht, welche als solche schon für andere Zwecke der Motorsteuerung und Einspritzung gemessen wird. Durch die verwendeten Mittel werden Verbrennungen detektiert, die niederfrequente Druckverläufe aufweisen und optional auch hochfrequente Druckanteile enthalten können.

Die Erfindung lässt zahlreiche Ausführungsformen zu. Eine davon soll anhand der in der Zeichnung dargestellten Figuren näher erläutert werden.

Es zeigt:
- Figur 1:: Vorrichtung zur Bestimmung einer unkontrollierten Verbrennung in einem Benzinmotor
- Figur 2:: Vergleich einer unkontrollierten Verbrennung mit einer Normalverbrennung
- Figur 3:: Prinzipdarstellung eines Verfahrens zur Ermittlung einer unkontrollierten Verbrennung
- Figur 4:: ein Ausführungsbeispiel für einen Algorithmus zur Ermittlung einer unkontrollierten Verbrennung

Gleiche Merkmale sind mit gleichen Bezugszeichen gekennzeichnet.

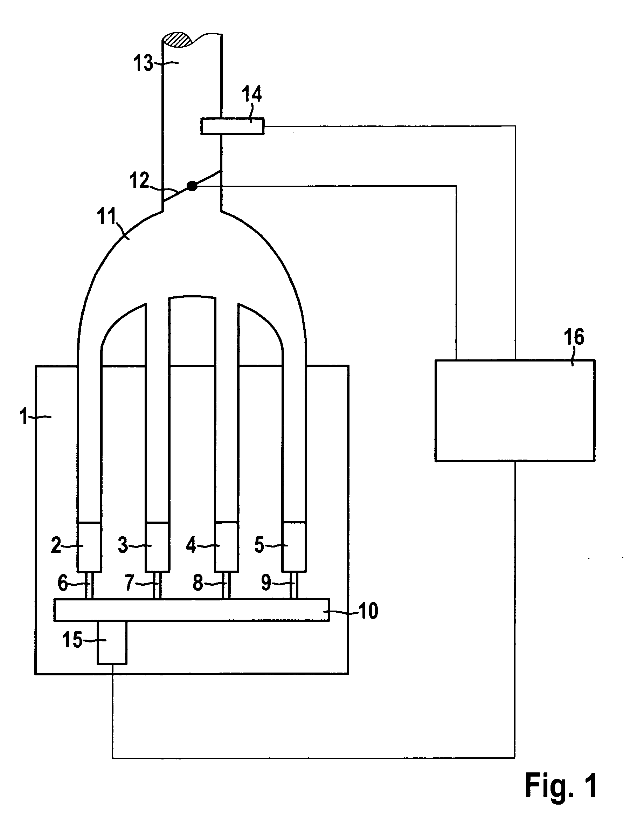

Figur 1 zeigt eine Vorrichtung zur Messung einer Verbrennung in einem Benzinmotor 1. Der Benzinmotor 1 weist in diesem Beispiel vier Zylinder 2, 3, 4, 5 auf, deren nicht weiter dargestellte Kolben, welche sich in dem Zylindern 2, 3, 4, 5 bewegen, über jeweils eine Pleuelstange 6, 7, 8, 9 mit der Kurbelwelle 10 verbunden sind und diese auf Grund der durch die Verbrennungen verursachten Druckänderungen antreiben. Die Zylinder 2, 3, 4, 5 sind mit einem Saugrohr 11 verbunden, welches durch eine Drosselklappe 12 gegenüber einem Luftansaugrohr 13 abgeschlossen ist. In das Luftansaugrohr 13 ragt eine Düse 14 zur Einspritzung von Kraftstoff, wodurch sich ein Kraftstoff-Luft-Gemisch bildet. Alternativ kann der Benzinmotor 1, insbesondere ein Downsizening-Motor, mit einer Direkteinspritzung ausgestattet sein, welche den Kraftstoff mittels eines Injektors für jeden Zylinder separat einspritzt. Darüber hinaus besteht ein wesentliches Merkmal in der Aufladung, die in der Regel aus einem nicht weiter dargestellten Turbolader besteht, aber auch zweistufig sein kann.

An der Kurbelwelle 10 ist ein Drehzahlsensor 15 angeordnet, welcher die Drehzahl der Kurbelwelle 10 detektiert und an ein Steuergerät 16 weiterleitet, das anhand der ermittelten Drehzahl die Verbrennungen klassifiziert. Weiterhin ist das Steuergerät 16 mit der Drosselklappe 12 und der Kraftstoffeinspritzdüse 14 verbunden.

Beim Öffnen der Drosselklappe 12 strömt das Kraftstoff-Luft-Gemisch in das Saugrohr 11 und somit in die Zylinder 2, 3, 4, 5. Durch einen von einer nicht weiter dargestellten Zündkerze ausgelösten Funken wird in den Zylindern 2, 3, 4, 5 nacheinander eine Verbrennung ausgelöst, welche einen Druckanstieg im Zylinder auslöst, der über den Kolben und die Pleuelstange 6, 7, 8, 9 auf die Kurbelwelle 10 übertragen wird und diese in Bewegung setzt.

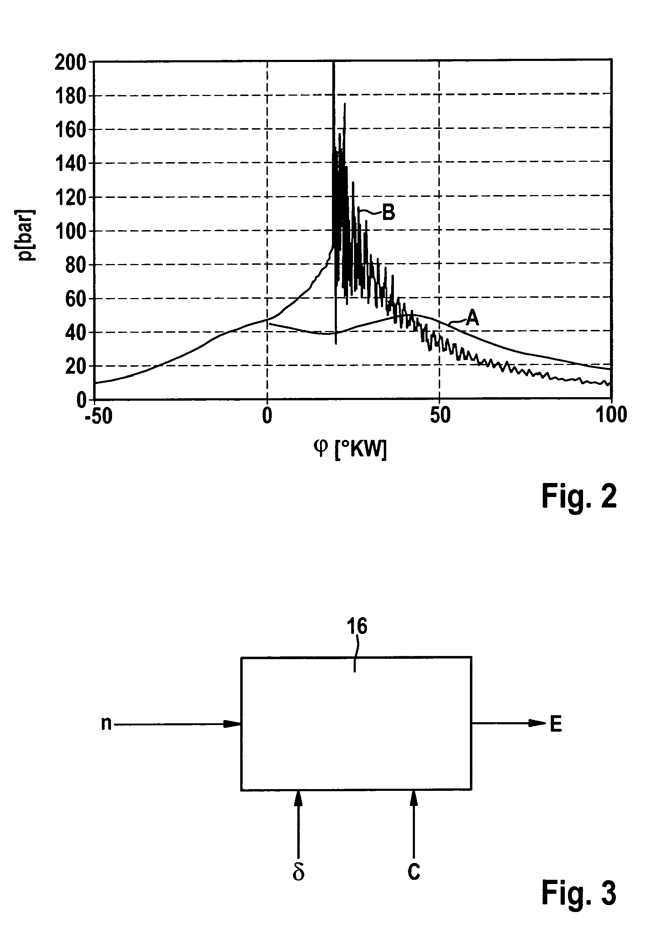

Der Druck über dem sich ändernde Kurbelwellenwinkel, welcher bei einer solchen normalen, kontrollierten Verbrennung entsteht, ist in Fig. 2, Kurve A dargestellt.

Neben den kontrollierten Verbrennungen treten Verbrennungen auf, die einen sehr frühen Brennbeginn aufweisen bzw. Verbrennungslagen aufweisen, die noch vor dem Zündzeitpunkt der Zündkerze liegen. Diese Verbrennungen werden als Superklopfer bezeichnet. Ein solcher Superklopfer ist im Kurve B der Figur 2 dargestellt, woraus ersichtlich ist, dass Superklopfer im Vergleich zu Normalverbrennungen wesentlich höhere Drücke erzeugen, die schädigend für den Benzinmotor 1 sind.

Das Steuergerät 16 weist zur Klassifizierung der Verbrennungen in Normalverbrennungen und Superklopfer einen Algorithmus 17 auf, wie es in Figur 3 dargestellt ist. Als Eingangsgröße dient dem Algorithmus die Drehzahl n der Kurbelwelle 10. Je nachdem, welcher Druck auf den Kolben und die Pleuelstange 6, 7, 8, 9 des Zylinders 2, 3, 4, 5 wirkt, ändert sich die Kraft, die die Kurbelwelle 10 antreibt. Die Kurbelwelle 10 wird dabei beschleunigt oder die Bewegung der Kurbelwelle 10 verlangsamt sich. Befindet sich der Zylinder 2 3, 4, 5 in einer Verdichtungsphase, d.h. der Kolben bewegt sich gegen den oberen Totpunkt, verlangsamt sich die Geschwindigkeit der Kurbelwelle 10. Befindet sich der Zylinder 2, 3, 4, 5 in der Verbrennungsphase, wird der Kolben durch die auftretende explosive Verbrennung von dem oberen Totpunkt weg bewegt, wodurch sich die Geschwindigkeit der Kurbelwelle 10 erhöht. Überlagert wird dies durch Schwingungen auf der Drehzahl n, die durch oszillierende Massen verursacht werden. Um die Bewertung der Drehzahl der Kurbelwelle 10 gezielt auf die aktuelle Betriebssituation des Benzinmotors abzustimmen, werden als Betriebsparameter der Zündwinkel δ und der Betriebspunkt C des Benzinmotors 1 berücksichtigt, um feststellen zu können, ob ein Superklopfer vorliegt oder nicht.

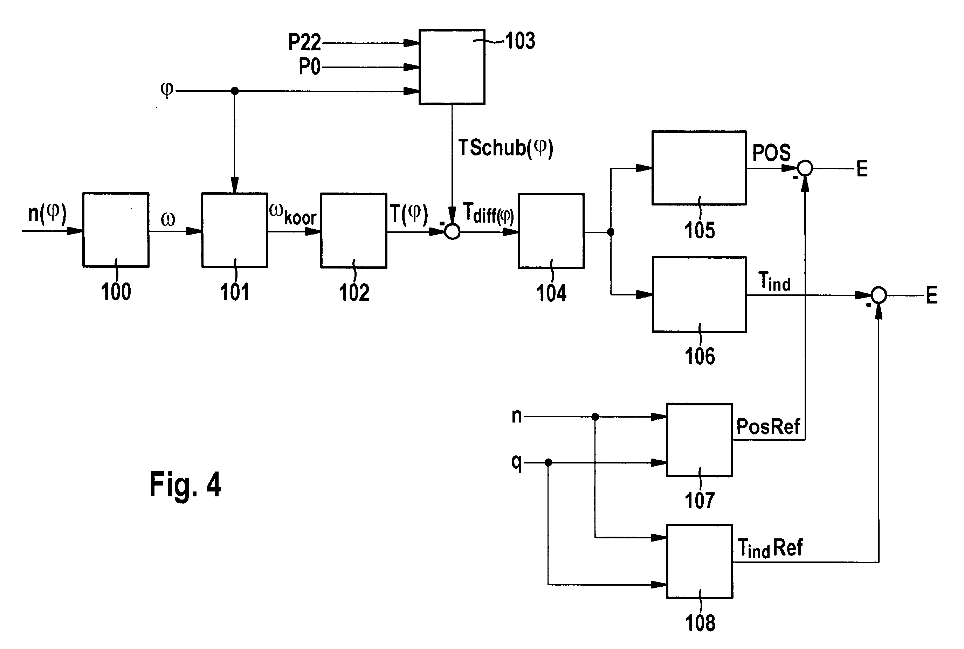

Ein Ausführungsbeispiel für einen Algorithmus zur Bestimmung einer unkontrollierten Verbrennung soll anhand von Figur 4 erläutert werden. Zunächst wird die von dem Drehzahlsensor 15 ermittelte Drehzahl n der Kurbelwelle 10 in Abhängigkeit von Kurbelwinkel ϕ im Block 100 in eine Winkelgeschwindigkeit umgerechnet. Im Block 101 werden die Effekte der oszillierenden Massen, die hauptsächlich durch die Kolben der Zylinder 2, 3, 4, 5 hervorgerufen werden, kompensiert. Weiterhin werden in diesem Block 101 Fehler in der Winkelgeschwindigkeit, verursacht durch sogenannte Zahnfehler, korrigiert. Zahnfehler entstehen zum Beispiel durch eine ungenaue Montage und Fertigung des Geberrades und können durch Verfahren, die aus dem Stand der Technik bekannt sind, ermittelt werden. Dadurch erhält man eine korrigierte Winkelgeschwindigkeit ωₖₒₒᵣ, die im Block 102 zunächst nach dem Kurbelwellenwinkel ϕ differenziert und anschließend mit dem Gesamtrotationsträgheitsmoment der Kurbelwelle 10 multipliziert wird. Daraus ergibt sich der Gasdrehmomentverlauf T(ϕ) des gefeuerten Betriebes des Benzinmotors 1.

Parallel dazu wird im Block 103 aus einer Messung des Ladedruckes p22 und des Umgebungsdruckes p0 sowie dem aktuellen Kurbelwellenwinkel ϕ ein Schubgasmoment TSchub(ϕ) bestimmt, wobei auch die Änderungen der Umgebungsparameter wie z.B. der Motor- und/oder der Kühlwassertemperatur mittels Korrekturen berücksichtigt werden.

Das Schubgasmoment TSchub(ϕ) wird von dem Gasdrehmomentenverlauf T(ϕ) subtrahiert, woraus sich der Gasmomentenverlauf der Verbrennung T Diff (ϕ) ergibt. Dadurch sind die Effekte des geschleppten Betriebes und des Ladedruckes berücksichtigt. Nach einer Filterung im Block 104 erhält man die zylinderindividuellen Merkmale. Im Block 105 wird als erstes Merkmal die Verbrennungslage POS berechnet, während im Block 106 ein mittleres indiziertes Gasmoment Tind bestimmt wird. Dabei wird der gefilterte Differenzgasmomentenverlauf Tdiff (ϕ) über dem Winkelbereich von ϕ1 bis ϕ2 des Kurbelwellenwinkels ϕ integriert.

Anschließend erfolgt ein Vergleich der Verbrennungslage POS mit einem Referenzwert PosRef, welcher im Block 107 aus einem Kennfeld ermittelt wird, in welchem die Verbrennungslage der Normalverbrennungen, d.h. solcher Verbrennungen, die durch den Zündfunken einer Zündkerze ausgelöst wurden, in Abhängigkeit der Drehzahl n und der Gesamtkraftstoffmenge q abgelegt sind.

Auch das ermittelte mittlere indizierte Gasmoment Tind wird mit einem Referenzwert TindRef verglichen, der ebenfalls in Abhängigkeit von der Drehzahl n der Kurbelwelle 10 und der Kraftstoffmenge q in einer Kennlinie abgelegt ist (Block 108). Treten entweder bei der Verbrennungslage POS oder dem mittleren induzierten Gasmoment Tind oder bei beiden Unterschiede zum jeweils bestimmten Referenzwert PosRef oder TindRef auf, erkennt das Steuergerät 16 im Ergebnis E des Vergleiches auf einen Superklopfer, also einer Verbrennung mit zu früher Verbrennungslage.

## Patentansprüche (Patentansprüche für folgende(n) Vertragsstaat(en): AT, BE, CH, DK, ES, FR, GB, GR, IT, LI, LU, MC, NL, SE)

1. Verfahren zur Erkennung von unkontrollierten Verbrennungen in einem Verbrennungsmotor, welche unabhängig von der Zündung durch eine Zündkerze auftreten, wobei die durch die Verbrennungen ausgelösten Druckschwingungen im Brennraum detektiert und ausgewertet werden, **dadurch gekennzeichnet, dass** zur Feststellung einer unkontrollierten Verbrennung vor der Zündung durch die Zündkerze und/oder vor dem normalen Brennbeginn für einen gegebenen Zündzeitpunkt die durch die Druckschwingungen beeinflusste Drehzahl (n) einer Kurbelwelle (10) des Verbrennungsmotors (1) ausgewertet wird.

2. Verfahren nach Anspruch 1 **dadurch gekennzeichnet, dass** die Drehzahl (n) der Kurbelwelle (10) bestimmt wird und in Abhängigkeit von der gemessenen Drehzahl (n) ein die Verbrennung charakterisierender Parameter (POS, Tind) ermittelt wird, welcher mit einem entsprechenden Referenzparameter (PosRef, TindRef) verglichen wird, der bei einer kontrollierten Verbrennung infolge der Zündung einer Zündkerze bestimmt wurde und bei Abweichung des Parameters (POS, Tind) vom Referenzparameter (PosRef, TindRef) auf das Vorliegen einer unkontrollierten Verbrennung geschlossen wird.

3. Verfahren nach Anspruch 2 **dadurch gekennzeichnet, dass** der von der Drehzahl (n) abhängige Parameter ein Gasmoment (Tind) ist, welches durch die Druckschwingungen im Brennraum infolge der Verbrennung auf die Kurbelwelle (10) wirkt.

4. Verfahren nach Anspruch 1 oder 2 **dadurch gekennzeichnet, dass** der von der Drehzahl (n) abhängige Parameter eine veränderte Verbrennungslage (POS) ist.

5. Verfahren nach Anspruch 2, 3 oder 4 **dadurch gekennzeichnet, dass** das bestimmte Gasmoment (Tind) und/ oder die bestimmte Verbrennungslage (POS) mit Referenzwerten (PosRef, TindRef) verglichen werden, welche bei der kontrollierten Verbrennung infolge der Zündung durch die Zündkerze ermittelt wurden, wobei bei dem Vergleich aktuelle Stellgrößen (δ, C) und/oder der Betriebspunkt (n, Last) des Verbrennungsmotors (1) berücksichtigt werden.

6. Verfahren nach Anspruch 5 **dadurch gekennzeichnet, dass** bei dem Vergleich der durch die Verbrennung hervorgerufenen Verbrennungslage (POS) mit der Verbrennungslage (PosRef), welche sich aus der kontrollierten Verbrennung durch Zündung durch die Zündkerze ergibt, als aktuelle Stellgrößen der Zündwinkel (δ), die Last (C) und die Drehzahl (n) berücksichtigt werden.

7. Verfahren nach Anspruch 6 **dadurch gekennzeichnet, dass** die sich aus der Verbrennung ergebende Verbrennungslage (POS) mit Hilfe mindestens eines die aktuellen Stellgrößen (δ, C) umfassenden Kennfeldes und/oder einem physikalisch basierten mathematischen Modell, welches die aktuellen Stellgrößen (δ, C) beinhaltet, bestimmt wird.

8. Verfahren nach Anspruch 3 **dadurch gekennzeichnet, dass** die Gasmomente (Tind), welche durch die Druckschwingungen im Brennraum infolge der Verbrennung auf die Kurbelwelle (10) auftreten, als Wechselmomente ermittelt werden.

9. Verfahren nach Anspruch 8 **dadurch gekennzeichnet, dass** die Wechselmomente hinsichtlich der oszillierenden Massen und/oder den Verläufen der Wechselmomente und/oder den Geberradfehlern korrigiert werden.

10. Verfahren nach Anspruch 8 oder 9 **dadurch gekennzeichnet, dass** der Verlauf der Wechselmomente (Tind) jeweils für jeden Zylinder (2, 3, 4, 5) in einem geeigneten Bereich jeweils zu einem Intergralendwert aufsummiert wird, aus denen jeweils für jeden Zylinder (2, 3, 4, 5) des Verbrennungsmotors (1) auf ein zylinderindividuelles Gasmoment geschlossen wird.

11. Verfahren nach Anspruch 8 oder 9 **dadurch gekennzeichnet, dass** der Verlauf eines Wechselmomentes (Tind) in mindestens zwei Bereiche unterteilt wird, wobei für jeden Bereich ein Integralendwert berechnet wird, ein Vergleich jedes Intergralendwertes mit einem Referenzintegralendwert oder ein Vergleich der beiden Integralendwerte untereinander und/oder mit einem Referenzvergleichswert erfolgt, wobei beim Auftreten einer Abweichung auf eine unkontrollierte Verbrennung geschlossen wird.

12. Verfahren nach Anspruch 11 **dadurch gekennzeichnet, dass** die mindestens beiden Bereiche von dem Zündwinkel (δ)und/oder dem Betriebspunkt ( C ) des Verbrennungsmotors (1) abhängen.

13. Verfahren nach Anspruch 2 oder 5 **dadurch gekennzeichnet, dass** zur Entscheidung über das Vorliegen einer unkontrollierten Verbrennung Referenzwerte (PosRef, TindRef) herangezogen werden, die aus den Werten vorhergehender Verbrennungslagen (POS) ermittelt werden.

14. Verfahren nach mindestens einem der vorhergehenden Ansprüche **dadurch gekennzeichnet, dass** die Auswertung der Drehzahl (n) auf der Basis von Zahnzeiten des an der Kurbelwelle (10) angebrachten Geberrades erfolgt.

15. Vorrichtung zur Erkennung von unkontrollierten Verbrennungen in einem Verbrennungsmotor, welche insbesondere unabhängig von der Zündung durch eine Zündkerze auftreten, wobei die durch die Verbrennungen ausgelösten Druckschwingungen im Brennraum ausgewertet werden, **dadurch gekennzeichnet, dass** Mittel (16) vorhanden sind, welche zur Feststellung einer unkontrollierten Verbrennung vor der Zündung durch die Zündkerze die durch die Druckschwingungen beeinflusste Drehzahl (n) einer Kurbelwelle (10) des Verbrennungsmotors (1) auswerten.

## Patentansprüche (Patentansprüche für folgende(n) Vertragsstaat(en): DE)

1. Verfahren zur Erkennung von unkontrollierten Verbrennungen in einem Verbrennungsmotor, welche unabhängig von der Zündung durch eine Zündkerze auftreten, wobei die durch die Verbrennungen ausgelösten Druckschwingungen im Brennraum detektiert und ausgewertet werden, und zur Feststellung einer unkontrollierten Verbrennung vor der Zündung durch die Zündkerze und/oder vor dem normalen Brennbeginn für einen gegebenen Zündzeitpunkt die durch die Druckschwingungen beeinflusste Drehzahl (n) einer Kurbelwelle (10) des Verbrennungsmotors (1) ausgewertet wird **dadurch gekennzeichnet, dass** aus der Drehzahl ein Gasdrehmomentverlauf T(ϕ) abgeleitet und ausgewertet wird.

2. Verfahren nach Anspruch 1 **dadurch gekennzeichnet, dass** die Drehzahl (n) der Kurbelwelle (10) bestimmt wird und in Abhängigkeit von der gemessenen Drehzahl (n) ein die Verbrennung charakterisierender Parameter (POS, Tind) ermittelt wird, welcher mit einem entsprechenden Referenzparameter (PosRef, TindRef) verglichen wird, der bei einer kontrollierten Verbrennung infolge der Zündung einer Zündkerze bestimmt wurde und bei Abweichung des Parameters (POS, Tind) vom Referenzparameter (PosRef, TindRef) auf das Vorliegen einer unkontrollierten Verbrennung geschlossen wird.

3. Verfahren nach Anspruch 2 **dadurch gekennzeichnet, dass** der von der Drehzahl (n) abhängige Parameter ein Gasmoment (Tind) ist, welches durch die Druckschwingungen im Brennraum infolge der Verbrennung auf die Kurbelwelle (10) wirkt.

4. Verfahren nach Anspruch 1 oder 2 **dadurch gekennzeichnet, dass** der von der Drehzahl (n) abhängige Parameter eine veränderte Verbrennungslage (POS) ist.

5. Verfahren nach Anspruch 2, 3 oder 4 **dadurch gekennzeichnet, dass** das bestimmte Gasmoment (Tind) und/ oder die bestimmte Verbrennungslage (POS) mit Referenzwerten (PosRef, TindRef) verglichen werden, welche bei der kontrollierten Verbrennung infolge der Zündung durch die Zündkerze ermittelt wurden, wobei bei dem Vergleich aktuelle Stellgrößen (δ, C) und/oder der Betriebspunkt (n, Last) des Verbrennungsmotors (1) berücksichtigt werden.

6. Verfahren nach Anspruch 5 **dadurch gekennzeichnet, dass** bei dem Vergleich der durch die Verbrennung hervorgerufenen Verbrennungslage (POS) mit der Verbrennungslage (PosRef), welche sich aus der kontrollierten Verbrennung durch Zündung durch die Zündkerze ergibt, als aktuelle Stellgrößen der Zündwinkel (δ), die Last (C) und die Drehzahl (n) berücksichtigt werden.

7. Verfahren nach Anspruch 6 **dadurch gekennzeichnet, dass** die sich aus der Verbrennung ergebende Verbrennungslage (POS) mit Hilfe mindestens eines die aktuellen Stellgrößen (δ, C) umfassenden Kennfeldes und/oder einem physikalisch basierten mathematischen Modell, welches die aktuellen Stellgrößen (δ, C) beinhaltet, bestimmt wird.

8. Verfahren nach Anspruch 3 **dadurch gekennzeichnet, dass** die Gasmomente (Tind), welche durch die Druckschwingungen im Brennraum infolge der Verbrennung auf die Kurbelwelle (10) auftreten, als Wechselmomente ermittelt werden.

9. Verfahren nach Anspruch 8 **dadurch gekennzeichnet, dass** die Wechselmomente hinsichtlich der oszillierenden Massen und/oder den Verläufen der Wechselmomente und/oder den Geberradfehlern korrigiert werden.

10. Verfahren nach Anspruch 8 oder 9 **dadurch gekennzeichnet, dass** der Verlauf der Wechselmomente (Tind) jeweils für jeden Zylinder (2, 3, 4, 5) in einem geeigneten Bereich jeweils zu einem Intergralendwert aufsummiert wird, aus denen jeweils für jeden Zylinder (2, 3, 4, 5) des Verbrennungsmotors (1) auf ein zylinderindividuelles Gasmoment geschlossen wird.

11. Verfahren nach Anspruch 8 oder 9 **dadurch gekennzeichnet, dass** der Verlauf eines Wechselmomentes (Tind) in mindestens zwei Bereiche unterteilt wird, wobei für jeden Bereich ein Integralendwert berechnet wird, ein Vergleich jedes Intergralendwertes mit einem Referenzintegralendwert oder ein Vergleich der beiden Integralendwerte untereinander und/oder mit einem Referenzvergleichswert erfolgt, wobei beim Auftreten einer Abweichung auf eine unkontrollierte Verbrennung geschlossen wird.

12. Verfahren nach Anspruch 11 **dadurch gekennzeichnet, dass** die mindestens beiden Bereiche von dem Zündwinkel (δ)und/oder dem Betriebspunkt ( C ) des Verbrennungsmotors (1) abhängen.

13. Verfahren nach Anspruch 2 oder 5 **dadurch gekennzeichnet, dass** zur Entscheidung über das Vorliegen einer unkontrollierten Verbrennung Referenzwerte (PosRef, TindRef) herangezogen werden, die aus den Werten vorhergehender Verbrennungslagen (POS) ermittelt werden.

14. Verfahren nach mindestens einem der vorhergehenden Ansprüche **dadurch gekennzeichnet, dass** die Auswertung der Drehzahl (n) auf der Basis von Zahnzeiten des an der Kurbelwelle (10) angebrachten Geberrades erfolgt.

15. Vorrichtung zur Erkennung von unkontrollierten Verbrennungen in einem Verbrennungsmotor, welche insbesondere unabhängig von der Zündung durch eine Zündkerze auftreten, wobei die durch die Verbrennungen ausgelösten Druckschwingungen im Brennraum ausgewertet werden, wobei Mittel (16) vorhanden sind, welche zur Feststellung einer unkontrollierten Verbrennung vor der Zündung durch die Zündkerze die durch die Druckschwingungen beeinflusste Drehzahl (n) einer Kurbelwelle (10) des Verbrennungsmotors (1) auswerten, **dadurch gekennzeichnet, dass** die Mittel (16) aus der Drehzahl einen Gasdrehmomentverlauf T(ϕ) ableiten und diesen auswerten.

## Claims (Claims for the following Contracting State(s): AT, BE, CH, DK, ES, FR, GB, GR, IT, LI, LU, MC, NL, SE)

1. Method for detecting uncontrolled combustion processes in an internal combustion engine, which combustion processes occur independently of the ignition by means of a spark plug, wherein the pressure oscillations in the combustion chamber which are triggered by the combustion processes are detected and evaluated, **characterized in that** in order to determine an uncontrolled combustion process before the ignition by means of the spark plug and/or before the normal start of combustion the rotational speed (n) of a crankshaft (10) of the internal combustion engine (1) which is influenced by the pressure oscillations is evaluated for a given ignition time.

2. Method according to Claim 1, **characterized in that** the rotational speed (n) of the crankshaft (10) is determined, and a parameter (POS, Tind) which characterizes the combustion process is determined as a function of the measured rotational speed (n) which parameter (POS, Tind) is compared with a corresponding reference parameter (PosRef, TindRef) which was determined in the case of a controlled combustion process as a result of the ignition of a spark plug, and when the parameter (POS, Tind) differs from the reference parameter (PosRef, TindRef) the presence of an uncontrolled combustion process is inferred.

3. Method according to Claim 2, **characterized in that** the parameter which is dependent on the rotational speed (n) is a gas torque (Tind) which acts on the crankshaft (10) as a result of the pressure oscillations in the combustion chamber owing to the combustion.

4. Method according to Claim 1 or 2, **characterized in that** the parameter which is dependent on the rotational speed (n) is a changed combustion situation (POS).

5. Method according to Claim 2, 3 or 4, **characterized in that** the specific gas torque (Tind) and/or the specific combustion situation (POS) are compared with reference values (PosRef, TindRef) which were determined during the controlled combustion process as a result of the ignition by means of the spark plug, wherein current manipulated variables (δ, C) and/or the operating point (n, load) of the internal combustion engine (1) are taken into account in the comparison.

6. Method according to Claim 5, **characterized in that** during the comparison of the combustion situation (POS) which is caused by the combustion process with the combustion situation (PosRef) which results from the controlled combustion process as a result of ignition by means of the spark plug, the ignition angle (δ), the load (C) and the rotational speed (n) are taken into account as current manipulated variables.

7. Method according to Claim 6, **characterized in that** the combustion situation (POS) which results from the combustion process is determined using at least one characteristic diagram which comprises the current manipulated variables (δ, C) and/or a physically based mathematical model which includes the current manipulated variables (δ, C).

8. Method according to Claim 3, **characterized in that** the gas torques (Tind) which occur on the crankshaft (10) owing to the pressure oscillations in the combustion chamber as a result of the combustion process are determined as alternating torques.

9. Method according to Claim 8, **characterized in that** the alternating torques are corrected in terms of the oscillating masses and/or the profiles of the alternating torques and/or the signal generator wheel errors.

10. Method according to Claim 8 or 9, **characterized in that** the profile of the alternating torques (Tind) is respectively summed for each cylinder (2, 3, 4, 5) in a suitable range in each case to form an integral final value, on the basis of which values in each case a cylinder-specific gas torque is inferred for each cylinder (2, 3, 4, 5) of the internal combustion engine (1).

11. Method according to Claim 8 or 9, **characterized in that** the profile of an alternating torque (Tind) is divided into at least two regions, wherein an integral final value is calculated for each region and a comparison of each integral final value with a reference integral final value or a comparison of the two integral final values with one another and/or with a reference comparison value is carried out, wherein an uncontrolled combustion process is inferred when a deviation occurs.

12. Method according to Claim 11, **characterized in that** the at least two regions depend on the ignition angle (δ) and/or the operating point (C) of the internal combustion engine (1).

13. Method according to Claim 2 or 5, **characterized in that** in order to decide about the presence of an uncontrolled combustion process reference values (PosRef, TindRef) are used which are determined from the values of preceding combustion situations (POS).

14. Method according to at least one of the preceding claims, **characterized in that** the evaluation of the rotational speed (n) is made on the basis of tooth times of the signal generator wheel which is attached to the crankshaft (10).

15. Device for detecting uncontrolled combustion processes in an internal combustion engine, which combustion processes occur, in particular, independently of the ignition by means of a spark plug, wherein the pressure oscillations in the combustion chamber which are triggered by the combustion processes are evaluated, **characterized in that** means (16) are present which, in order to determine an uncontrolled combustion process before the ignition by means of the spark plug, evaluate the rotational speed (n) of a crankshaft (10) of the internal combustion engine (1) which is influenced by the pressure oscillations.

## Claims (Claims for the following Contracting State(s): DE)

1. Method for detecting uncontrolled combustion processes in an internal combustion engine, which combustion processes occur independently of the ignition by means of a spark plug, wherein the pressure oscillations in the combustion chamber which are triggered by the combustion processes are detected and evaluated, and in order to determine an uncontrolled combustion process before the ignition by means of the spark plug and/or before the normal start of combustion the rotational speed (n) of a crankshaft (10) of the internal combustion engine (1) which is influenced by the pressure oscillations is evaluated for a given ignition time, **characterized in that** a gas torque profile T(ϕ) is derived from the rotational speed and evaluated.

2. Method according to Claim 1, **characterized in that** the rotational speed (n) of the crankshaft (10) is determined, and a parameter (POS, Tind) which characterizes the combustion process is determined as a function of the measured rotational speed (n), which parameter (POS, Tind) is compared with a corresponding reference parameter (PosRef, TindRef) which was determined in the case of a controlled combustion process as a result of the ignition of a spark plug, and when the parameter (POS, Tind) differs from the reference parameter (PosRef, TindRef) the presence of an uncontrolled combustion process is inferred.

3. Method according to Claim 2, **characterized in that** the parameter which is dependent on the rotational speed (n) is a gas torque (Tind) which acts on the crankshaft (10) as a result of the pressure oscillations in the combustion chamber owing to the combustion.

4. Method according to Claim 1 or 2, **characterized in that** the parameter which is dependent on the rotational speed (n) is a changed combustion situation (POS).

5. Method according to Claim 2, 3 or 4, **characterized in that** the specific gas torque (Tind) and/or the specific combustion situation (POS) are compared with reference values (PosRef, TindRef) which were determined during the controlled combustion process as a result of the ignition by means of the spark plug, wherein current manipulated variables (δ, C) and/or the operating point (n, load) of the internal combustion engine (1) are taken into account in the comparison.

6. Method according to Claim 5, **characterized in that** during the comparison of the combustion situation (POS) which is caused by the combustion process with the combustion situation (PosRef) which results from the controlled combustion process as a result of ignition by means of the spark plug, the ignition angle (δ), the load (C) and the rotational speed (n) are taken into account as current manipulated variables.

7. Method according to Claim 6, **characterized in that** the combustion situation (POS) which results from the combustion process is determined using at least one characteristic diagram which comprises the current manipulated variables (δ, C) and/or a physically based mathematical model which includes the current manipulated variables (δ, C).

8. Method according to Claim 3, **characterized in that** the gas torques (Tind) which occur on the crankshaft (10) owing to the pressure oscillations in the combustion chamber as a result of the combustion process are determined as alternating torques.

9. Method according to Claim 8, **characterized in that** the alternating torques are corrected in terms of the oscillating masses and/or the profiles of the alternating torques and/or the signal generator wheel errors.

10. Method according to Claim 8 or 9, **characterized in that** the profile of the alternating torques (Tind) is respectively summed for each cylinder (2, 3, 4, 5) in a suitable range in each case to form an integral final value, on the basis of which values in each case a cylinder-specific gas torque is inferred for each cylinder (2, 3, 4, 5) of the internal combustion engine (1).

11. Method according to Claim 8 or 9, **characterized in that** the profile of an alternating torque (Tind) is divided into at least two regions, wherein an integral final value is calculated for each region and a comparison of each integral final value with a reference integral final value or a comparison of the two integral final values with one another and/or with a reference comparison value is carried out, wherein an uncontrolled combustion process is inferred when a deviation occurs.

12. Method according to Claim 11, **characterized in that** the at least two regions depend on the ignition angle (δ) and/or the operating point (C) of the internal combustion engine (1).

13. Method according to Claim 2 or 5, **characterized in that** in order to decide about the presence of an uncontrolled combustion process reference values (PosRef, TindRef) are used which are determined from the values of preceding combustion situations (POS).

14. Method according to at least one of the preceding claims, **characterized in that** the evaluation of the rotational speed (n) is made on the basis of tooth times of the signal generator wheel which is attached to the crankshaft (10).

15. Device for detecting uncontrolled combustion processes in an internal combustion engine, which combustion processes occur, in particular, independently of the ignition by means of a spark plug, wherein the pressure oscillations in the combustion chamber which are triggered by the combustion processes are evaluated, wherein means (16) are present which, in order to determine an uncontrolled combustion process before the ignition by means of the spark plug, evaluate the rotational speed (n) of a crankshaft (10) of the internal combustion engine (1) which is influenced by the pressure oscillations, **characterized in that** the means (16) derive a gas torque profile T(ϕ) from the rotational speed and evaluate it.

## Revendications (Revendications pour l'(les) Etat(s) contractant(s) suivant(s): AT, BE, CH, DK, ES, FR, GB, GR, IT, LI, LU, MC, NL, SE)

1. Procédé de détection de combustions non contrôlées dans un moteur à combustion interne, lesdites combustions se produisant indépendamment de l'allumage par le biais d'une bougie d'allumage, les oscillations de pression déclenchées par les combustions étant détectées dans la chambre de combustion et analysées, **caractérisé en ce que** pour constater une combustion non contrôlée avant l'allumage par la bougie d'allumage et/ou avant le début normal de l'inflammation pour un instant d'allumage donné, on analyse la vitesse de rotation (n), influencée par les oscillations de pression, d'un vilebrequin (10) du moteur à combustion interne (1).

2. Procédé selon la revendication 1, **caractérisé en ce que** la vitesse de rotation (n) du vilebrequin (10) est définie et qu'un paramètre (POS, Tind) caractérisant la combustion est calculé en fonction de la vitesse de rotation (n) mesurée, ledit paramètre étant comparé à un paramètre de référence (PosRef, TindRef) correspondant défini pour une combustion contrôlée à la suite de l'allumage d'une bougie d'allumage et qu'on déduit la présence d'une combustion non contrôlée en présence d'un écart du paramètre (POS, Tind) par rapport au paramètre de référence (PosRef, TindRef).

3. Procédé selon la revendication 2, **caractérisé en ce que** le paramètre dépendant de la vitesse de rotation (n) est un couple de gaz (Tind) agissant sur le vilebrequin (10) par le biais des oscillations de pression se produisant dans la chambre de combustion à la suite de la combustion.

4. Procédé selon la revendication 1 ou 2 **caractérisé en ce que** le paramètre dépendant de la vitesse de rotation (n) est une position de combustion (POS) modifiée.

5. Procédé selon la revendication 2, 3 ou 4, **caractérisé en ce que** le couple de gaz (Tind) défini et/ou la position de combustion (POS) définie sont comparés aux valeurs de référence (PosRef, TindRef) pour la combustion contrôlée à la suite de l'allumage par la bougie d'allumage, des grandeurs de réglage (δ, C) actuelles et/ou le point de fonctionnement (n, Charge) du moteur à combustion interne (1) étant pris en compte lors de la comparaison.

6. Procédé selon la revendication 5, **caractérisé en ce que** lors de la comparaison de la position de combustion (POS) produite par la combustion avec la position de combustion (PosRef) résultant de la combustion contrôlée par le biais de l'allumage par la bougie d'allumage, la charge (C) et la vitesse de rotation (n) sont prises en compte comme grandeurs de réglage actuelles de l'angle d'allumage (δ).

7. Procédé selon la revendication 6, **caractérisé en ce que** la position de combustion (POS) résultant de la combustion est définie à l'aide d'au moins un champ caractéristique comprenant les grandeurs de réglage (δ, C) actuelles et/ou d'un modèle mathématique à base physique contenant les grandeurs de réglage (δ, C) actuelles.

8. Procédé selon la revendication 3, **caractérisé en ce que** les couples de gaz (Tind) survenant sur le vilebrequin (10) du fait des oscillations de pression se produisant dans la chambre de combustion à la suite de la combustion sont définis comme des moments de bascule.

9. Procédé selon la revendication 8, **caractérisé en ce que** les moments de bascule sont corrigés par rapport aux masses oscillantes et/ou aux courbes des moments de bascule et/ou aux anomalies de roue de détection.

10. Procédé selon la revendication 8 ou 9, **caractérisé en ce que** la courbe des moments de bascule (Tind) est respectivement ajoutée à une valeur finale intégrale respective pour chaque cylindre (2, 3, 4, 5) dans une zone adaptée, un couple de gaz individuel à chaque cylindre en étant respectivement déduit pour chaque cylindre (2, 3, 4, 5) du moteur à combustion interne (1).

11. Procédé selon la revendication 8 ou 9, **caractérisé en ce que** la courbe d'un moment de bascule (Tind) est subdivisée en au moins deux zones, une valeur terminale intégrale étant calculée pour chaque zone, une comparaison de chaque valeur finale intégrale étant effectuée avec une valeur finale intégrale de référence ou une comparaison des deux valeurs finales intégrales entre elles et/ou avec une valeur de comparaison de référence, sachant qu'on déduit en cas d'écart la présence d'une combustion non contrôlée.

12. Procédé selon la revendication 11, **caractérisé en ce que** les au moins deux zones dépendent de l'angle d'allumage (δ) et/ou du point de fonctionnement ( C ) du moteur à combustion interne (1).

13. Procédé selon la revendication 2 ou 5, **caractérisé en ce que** pour décider de la présence d'une combustion non contrôlée, on utilise des valeurs de référence (PosRef, TindRef) calculées à partir des valeurs des positions de combustion (POS) précédentes.

14. Procédé selon au moins l'une quelconque des revendications précédentes, **caractérisé en ce que** l'analyse de la vitesse de rotation (n) est effectuée sur la base des durées de denture de la roue de détection placée au niveau du vilebrequin (10).

15. Dispositif de détection de combustions non contrôlées dans un moteur à combustion interne se produisant notamment indépendamment de l'allumage par le biais d'une bougie d'allumage, les oscillations de pression déclenchées par les combustions étant analysées dans la chambre de combustion, **caractérisé en ce que** des moyens (16) sont présents, lesdits moyens analysant la vitesse de rotation (n), influencée par les oscillations de pression, d'un vilebrequin (10) du moteur à combustion interne (1) pour constater une combustion non contrôlée avant l'allumage par la bougie d'allumage.

## Revendications (Revendications pour l'(les) Etat(s) contractant(s) suivant(s): DE)

1. Procédé de détection de combustions non contrôlées dans un moteur à combustion interne, lesdites combustions se produisant indépendamment de l'allumage par le biais d'une bougie d'allumage, les oscillations de pression déclenchées par les combustions étant détectées dans la chambre de combustion et analysées et pour constater une combustion non contrôlée avant l'allumage par la bougie d'allumage et/ou avant le début normal de l'inflammation pour un instant d'allumage donné, on analyse la vitesse de rotation (n), influencée par les oscillations de pression, d'un vilebrequin (10) du moteur à combustion interne (1), **caractérisé en ce qu'**on déduit et qu'une courbe de couple de rotation de gaz T(ϕ) est déduite à partir de la vitesse de rotation et analysée.

2. Procédé selon la revendication 1, **caractérisé en ce que** la vitesse de rotation (n) du vilebrequin (10) est définie et qu'un paramètre (POS, Tind) caractérisant la combustion est calculé en fonction de la vitesse de rotation (n) mesurée, ledit paramètre étant comparé à un paramètre de référence (PosRef, TindRef) correspondant défini pour une combustion contrôlée à la suite de l'allumage d'une bougie d'allumage et qu'on déduit la présence d'une combustion non contrôlée en présence d'un écart du paramètre (POS, Tind) par rapport au paramètre de référence (PosRef, TindRef).

3. Procédé selon la revendication 2, **caractérisé en ce que** le paramètre dépendant de la vitesse de rotation (n) est un couple de gaz (Tind) agissant sur le vilebrequin (10) par le biais des oscillations de pression se produisant dans la chambre de combustion à la suite de la combustion.

4. Procédé selon la revendication 1 ou 2, **caractérisé en ce que** le paramètre dépendant de la vitesse de rotation (n) est une position de combustion (POS) modifiée.

5. Procédé selon la revendication 2, 3 ou 4, **caractérisé en ce que** le couple de gaz (Tind) défini et/ou la position de combustion (POS) définie sont comparés aux valeurs de référence (PosRef, TindRef) pour la combustion contrôlée à la suite de l'allumage par la bougie d'allumage, des grandeurs de réglage (δ, C) actuelles et/ou le point de fonctionnement (n, Charge) du moteur à combustion interne (1) étant pris en compte lors de la comparaison.

6. Procédé selon la revendication 5, **caractérisé en ce que** lors de la comparaison de la position de combustion (POS) produite par la combustion avec la position de combustion (PosRef) résultant de la combustion contrôlée par le biais de l'allumage par la bougie d'allumage, la charge (C) et la vitesse de rotation (n) sont prises en compte comme grandeurs de réglage actuelles de l'angle d'allumage (δ).

7. Procédé selon la revendication 6, **caractérisé en ce que** la position de combustion (POS) résultant de la combustion est définie à l'aide d'au moins un champ caractéristique comprenant les grandeurs de réglage (5, C) actuelles et/ou d'un modèle mathématique à base physique contenant les grandeurs de réglage (δ, C) actuelles.

8. Procédé selon la revendication 3, **caractérisé en ce que** les couples de gaz (Tind) survenant sur le vilebrequin (10) du fait des oscillations de pression se produisant dans la chambre de combustion à la suite de la combustion sont définis comme des moments de bascule.

9. Procédé selon la revendication 8, **caractérisé en ce que** les moments de bascule sont corrigés par rapport aux masses oscillantes et/ou aux courbes des moments de bascule et/ou aux anomalies de roue de détection.

10. Procédé selon la revendication 8 ou 9, **caractérisé en ce que** la courbe des moments de bascule (Tind) est respectivement ajoutée à une valeur finale intégrale respective pour chaque cylindre (2, 3, 4, 5) dans une zone adaptée, un couple de gaz individuel à chaque cylindre en étant respectivement déduit pour chaque cylindre (2, 3, 4, 5) du moteur à combustion interne (1).

11. Procédé selon la revendication 8 ou 9, **caractérisé en ce que** la courbe d'un moment de bascule (Tind) est subdivisée en au moins deux zones, une valeur terminale intégrale étant calculée pour chaque zone, une comparaison de chaque valeur finale intégrale étant effectuée avec une valeur finale intégrale de référence ou une comparaison des deux valeurs finales intégrales entre elles et/ou avec une valeur de comparaison de référence, sachant qu'on déduit en cas d'écart la présence d'une combustion non contrôlée.

12. Procédé selon la revendication 11, **caractérisé en ce que** les au moins deux zones dépendent de l'angle d'allumage (δ) et/ou du point de fonctionnement ( C ) du moteur à combustion interne (1).

13. Procédé selon la revendication 2 ou 5, **caractérisé en ce que** pour décider de la présence d'une combustion non contrôlée, on utilise des valeurs de référence (PosRef, TindRef) calculées à partir des valeurs des positions de combustion (POS) précédentes.

14. Procédé selon au moins l'une quelconque des revendications précédentes, **caractérisé en ce que** l'analyse de la vitesse de rotation (n) est effectuée sur la base des durées de denture de la roue de détection placée au niveau du vilebrequin (10).

15. Dispositif de détection de combustions non contrôlées dans un moteur à combustion interne se produisant notamment indépendamment de l'allumage par le biais d'une bougie d'allumage, les oscillations de pression déclenchées par les combustions étant analysées dans la chambre de combustion, des moyens (16) étant présents, lesdits moyens analysant la vitesse de rotation (n), influencée par les oscillations de pression, d'un vilebrequin (10) du moteur à combustion interne (1) pour constater une combustion non contrôlée avant l'allumage par la bougie d'allumage, **caractérisé en ce que** les moyens (16) déduisent une courbe de couple de rotation de gaz T(ϕ) à partir de la vitesse de rotation et l'analysent.
